# EUROPÄISCHE PATENTANMELDUNG

(11) **EP 2 390 167 A2**
(43) Veröffentlichungstag der Anmeldung: **30.11.2011**
(21) Anmeldenummer: 11004297.5
(22) Anmeldetag: 25.05.2011
(51) Int. Cl.: B62D 25/20

(54) **Fahrzeugkarrosserieaufbau im Bodenbereich einer Insassenkabine**

(30) Priorität: 29.05.2010 DE 102010021993
(71) Anmelder: Audi AG, 85045 Ingolstadt (DE)
(72) Erfinder: Olef, Nils, 85049 Ingolstadt (DE); Maier, Hans-Peter, 85283 Wolnzach (DE); Neufeldt, Christian, 74177 Bad Friedrichshall (DE); Kühl, Sönke, 69120 Heidelberg (DE)
(74) Vertreter: Engelhardt, Harald

(57) **Zusammenfassung**

Die Erfindung betrifft einen Fahrzeugkarosserieaufbau im Bodenbereich einer Insassenkabine mit jeweils einem Längsträger (8) im Bodenbereich (9) der Insassenkabine zwischen einem Mittentunnel (2) und einem Seitenschweller, wobei sich jeweils der Längsträger (8) bis zu einem einen Fußraum (3, 4) nach hinten begrenzenden, etwa vertikal und quer verlaufenden Fersenblech (5) erstreckt. Erfindungsgemäß ist der untere Bereich des Fersenblechs (5) wenigstens im Bereich des angrenzenden jeweiligen Längsträgerendes (11) Bestandteil eines Querträgerprofils (10) und das Längsträgerende (11) läuft in das Querträgerprofil (10) ein.

## Beschreibung

Die Erfindung betrifft einen Fahrzeugkarosserieaufbau im Bodenbereich einer Insassenkabine nach dem Oberbegriff des Anspruchs 1.

Aus der DE 44 14 472 C2 ist ein Fahrzeugkarosserieaufbau im Bodenbereich einer Insassenkabine bekannt mit jeweils einem Längsträger im Bodenbereich der Insassenkabine, welcher jeweils zwischen einem Mittentunnel und einem Seitenschweller in Fahrzeuglängsrichtung verläuft. Ein Fußraum der Insassenkabine wird üblicherweise nach hinten durch ein etwa vertikal und quer verlaufendes Fersenblech begrenzt. Zudem sind In diesem Bereich üblicherwelse Querträger angebracht.

Aufgabe der Erfindung ist es einen Fahrzeugkarosserleaufbau im Bodenbereich einer Insassenkabine so auszuführen, dass ein gewichtsgünstiger Aufbau mit der erforderlichen Steifigkeit und hoher Crashsicherheit sowie mit einer für einen Großeinsatz geeigneten Fügetechnik erhalten wird.

Diese Aufgabe wird dadurch gelöst, dass sich jeweils ein eingangsbeschriebener Längsträger mit einem Längsträgerende bis zum Fersenblech erstreckt und der untere Fersenblechbereich wenigstens im Bereich des angrenzenden jeweiligen Längsträgerendes Bestandteil eines Querträgerprofils ist dergestalt, dass das Längsträgerende In ein solches Querträgerprofil einläuft.

Damit ist unter Einbeziehung des Fersenblechs ein Längsträger-Querträgerverbund gewichtsgünstig hergestellt, wobei durch die ineinander einlaufenden Profile der Längsträger und des Querträgers definierte Lastpfade geschaffen sind, die einerseits eine hohe Karosseriesteifigkeit im Bodenbereich gewährleisten und andererseits im Crashfall zu einer hohen Aussteifung der Insassenkabine beitragen. Weiter sind durch die einlaufenden Profile die dortigen Bereiche der Unterbodenfläche relativ glatt und strömungsgünstig.

In einer bevorzugten konkreten Ausbildung wird das Einlaufen des Längsträgerendes in das Querträgerprofil in einem oberen Längsträgerendbereich dergestalt vorteilhaft ausgeführt, dass das Längsträgerende mit einer Oberwand des Längsträgerprofils mit einem auf der Oberwand aufliegenden etwa horizontal abgebogenen Randflansch des Fersenblechs verbunden ist, wobei der untere Fersenblechbereich (der an den abgebogenen Randflansch anschließende etwa vertikale Bereich) eine Vorderwand des Querträgerprofils bildet.

In einer Weiterbildung wird der Profileinlauf im unteren Bereich vorteilhaft dadurch realisiert, dass das Längsträgerende mit einer Unterwand des Längsträgerprofils an einen von unten an der Unterwand anliegenden etwa horizontal verlaufenden Randflansch eines Schließblechs des Querträgerprofils angeschlossen ist.

Das Schließblech kann sich dann (in einem Querschnitt betrachtet) vom Anschlussbereich an der Unterwand des Längsträgerprofils nach hinten über den Fersenblechbereich hinaus erstrecken, dann weiter nach oben verlaufen sowie anschließend zur Ausbildung eines geschlossenen Querträgerhohlprofils wieder zum Fersenblech hin abbiegen.

Mit den vorstehenden konkreten konstruktiven Lösungen wird ersichtlich mit relativ wenig Bauteilen eine einfache und funktionsfähige Anbindung zwischen den Längsträgem und einer Querträgerausbildung im Fersenblechbereich hergestellt.

Anhand einer Zeichnung wird die Erfindung weiter erläutert.

Es zeigen:
- Fig. 1: einen Längsschnitt eines Karosserieaufbaus im Bodenbereich und Fersenblechbereich einer Insassenkabine, und
- Fig. 2: eine vergrößerte schematische Darstellung des Bereichs A aus Fig. 1.

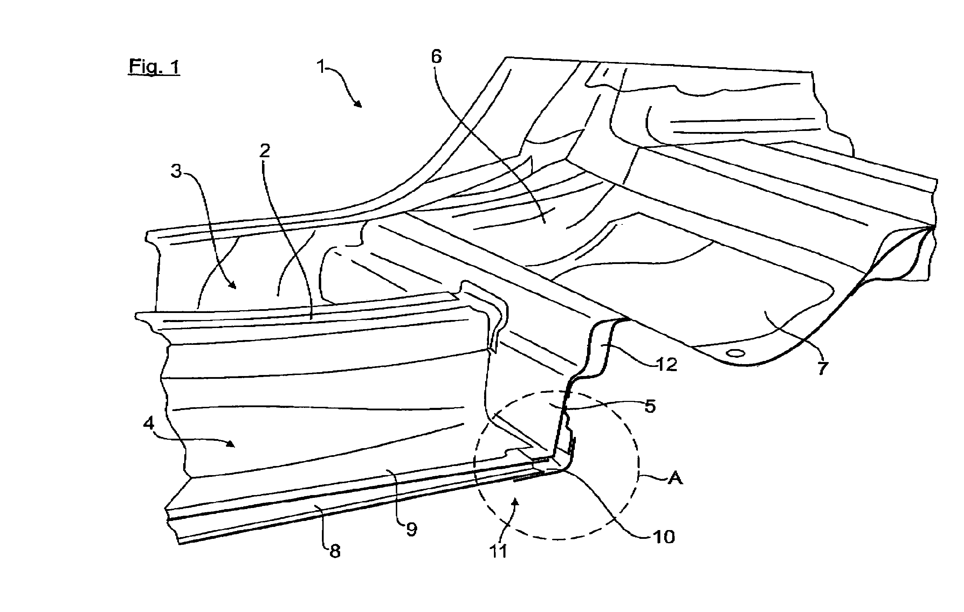

In Fig. 1 ist eine perspektivische Darstellung einer Rohkarosserie 1 dargestellt, wobei ein Mittentunnel 2 sowie ein rechtsseitiger hinterer Fußraum 3, ein linksseitiger hinterer Fußraum 4, ein die Fußräume 3, 4 nach hinten abschließendes Fersenblech 5 sowie eine rechtsseitige hintere Sitzmulde 6 und ein linksseitige hintere Sitzmulde 7 gezeigt sind. Der linksseitige Fußraum 4 ist in Längsrichtung im Bereich eines Längsträgers 8 geschnitten, der durchgehend von vorne zwischen dem Mittentunnel 2 und einem (nicht gezeigten) linksseitigen Schweller im Bodenbereich 9 der Insassenkabine verläuft und zusammen mit dem Bodenblech ausgebildet sein kann. Die gleiche Anordnung befindet sich auch im rechtsseitigen Fußraum 3.

Der Längsträger 8 erstreckt sich nach hinten bis zum Fersenblech 5, wo in dessen unterem Bereich ein Querträgerprofil 10 ausgebildet ist, in das der Längsträger 8 mit seinem hinteren Längsträgerende 11 einläuft.

Oberhalb des unteren Querträgerprofils 10 ist im Verlauf des Fersenblechs 5 ein weiteres oberes Querträgerprofil 12 ausgebildet.

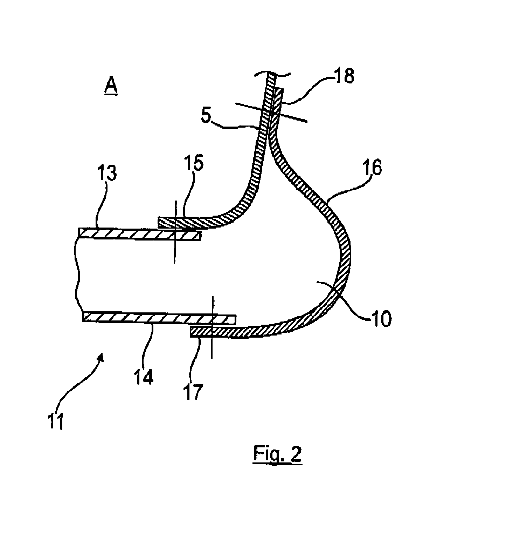

In Fig. 2 ist der Bereich A aus Flg. 1 schematisch vergrößert zur Erläuterung der Profilausbildungen und Profilanschlüsse gezeigt:

Im Längsschnitt nach Fig. 2 ist das hintere Längsträgerende 11 mit einer Oberwand 13 und Unterwand 14 des Längsträgerprofils dargestellt. Das Fersenblech 5 ist an der Oberwand 13 mit einem etwa horizontal abgebogenen Randflansch 15 angeschlossen, Zur Ausbildung des Querträgerprofils 10 ist weiter ein (einteiliges oder mehrteiliges) Schließblech 16 verwendet, welches von unten her mit einem etwa horizontal verlaufenden Randflansch 17 an der Unterwand 14 des Längsträgerendes 11 anliegt und dort verbunden ist.

Das Schließblech 16 erstreckt sich dann weiter über den Fersenblechbereich 5 nach hinten, verläuft dann mit einem Bogen nach oben und auf das Fersenblech 5 zu, wo es mit einem von hinten anliegenden Randflansch 18 verbunden ist. Damit ist ein geschlossenes Querträgerhohlprofil 10 geschaffen, bei dem der untere Tell des Fersenblechs 5 eine Vorderwand und das Schließblech 16 die anderen Wände bildet, wobei das Längsträgerende 11 in das Querträgerprofil 10 für eine stabile Anbindung einläuft.

## Patentansprüche

1. Fahrzeugkarosserieaufbau im Bodenbereich einer Insassenkabine mit jeweils einem Längsträger (8) im Bodenbereich (9) der Insassenkabine zwischen einem Mittentunnel (2) und einem Seitenschweller, wobei sich jeweils der Längsträger (8) bis zu einem einen Fußraum (3, 4) nach hinten begrenzenden, etwa vertikal und quer verlaufenden Fersenblech (5) erstreckt,
**dadurch gekennzeichnet, dass** der untere Bereich des Fersenblechs (5) wenigstens im Bereich des angrenzenden jeweiligen Längsträgerendes (11) Bestandteil eines Querträgerprofils (10) ist und das Längsträgerende (11) in das Querträgerprofil (10) einläuft.

2. Fahrzeugkarosserieaufbau nach Anspruch 1, **dadurch gekennzeichnet, dass** das Längsträgerende (11) mit einer Oberwand (13) des Längsträgerprofils mit einem auf der Oberwand (13) aufliegenden, etwa horizontal abgebogenen Randflansch (15) des Fersenblechs (5) verbunden ist, wobei der untere vertikale Fersenblechbereich eine Vorderwand des Querträgerprofils (10) bildet.

3. Fahrzeugkarosserieaufbau nach Anspruch 2, **dadurch gekennzeichnet, dass** das Längsträgerende (11) mit einer Unterwand (14) des Längsträgerprofils an einem von unten an der Unterwand (14) anliegenden etwa horizontal verlaufenden Randflansch (17) eines Schließblechs (16) des Querträgerprofils (10) angeschlossen ist.

4. Fahrzeugkarosserieaufbau nach Anspruch 3, **dadurch gekennzeichnet, dass** sich das Schließblech (16) in einem Querschnitt betrachtet vom Anschlussbereich an der Unterwand (14) des Längsträgerprofils nach hinten über den Bereich des Fersenblechs (5) hinaus erstreckt, dann weiter nach oben sowie anschließend zur Ausbildung eines geschlossenen Querträgerhohlprofils (10) wieder zum Fersenblech (5) hin abgebogen ist und dort mit einem von hinten anliegenden Randflansch (18) mit dem Fersenblech (5) verbunden ist.
